# EUROPEAN PATENT APPLICATION

(11) **EP 0 912 065 A2**
(43) Date of publication of application: **28.04.1999**
(21) Application number: 98118795.8
(22) Date of filing: 05.10.1998
(51) Int. Cl.: H04N 7/62

(54) **Method and apparatus for re-timing a digital signal**

(30) Priority: 27.10.1997 GB 9722500
(71) Applicant: NDS LIMITED, West Drayton, Middlesex UB7 ODQ (GB)
(72) Inventor: Loverseed, Edwin, Winchester, Hampshire SO23 7NG (GB)
(74) Representative: Stoakes, Rosemarie Clare

(57) **Abstract**

The present invention relates generally to receiving digital signals and more specifically to a method and apparatus for re-timing digital signals. The invention is of particular use in the field of digital video broadcasting.

This invention provides a method of receiving a digital signal made up of one or more packets which has been transmitted over a channel. An indicator is applied to each packet of the digital signal. The indicator is characteristic of the relative position of each packet with respect to time. The digital signal is output by releasing each packet when the indicator reaches a predetermined value. The packets can be released in such a manner that any timing errors in the received signal relative to an original transmitted signal are removed.

## Description

The present invention relates generally to receiving digital signals and more specifically to a method and apparatus for re-timing digital signals. The invention is of particular use in the field of digital video broadcasting.

The transmission of a digital video signal from one location to another is known as digital video broadcasting. A digital video broadcasting system includes a transmitter, a transmission channel and a receiver which is generally at a different location from the transmitter. The digital video signal is usually compressed into a series of consecutive data packets before being transmitted. Some of the data packets also contain control information that is generated by reference to a transmitter clock.

The series of consecutive data packets are transmitted over the transmission channel to the receiver. The transmission channel can be categorised as either synchronous or asynchronous. Examples of commonly used synchronous transmission channels are satellite, cable or terrestrial transmissions. An example of asynchronous channels includes packet switched networks such as those used by the Internet. Transmission over a synchronous channel results in a continuous series of data packets being received at the receiver. If the digital video signal is transmitted over an asynchronous channel, each of the data packets may be subject to variable delay. The series of data packets received at the receiver is therefore non-continuous. The variable delay of the data packets for asynchronous channels is known as jitter.

In the receiver, the digital signal is reconstructed from the data packets using a receiver clock. In order to achieve this, the receiver clock must be synchronised to the transmitter clock. If the receiver and transmitter clocks are not synchronised then control information in the received data packets cannot be correctly interpreted by the receiver. The receiver clock can be synchronised to the transmitter clock by regularly transmitting a reference packet to the receiver. The reference packet contains a sample of the transmitter clock. On reception of this reference packet the receiver clock can be adjusted as required.

In a digital video compression standard, ISOIEC 131818 (known as MPEG-2), the reference packets are referred to as Program Clock Reference (PCR) packets. MPEG-2 places several constraints on the generation of PCR packets. The PCR packets must be generated from a transmitter clock running at about 27MHz. The rate of change of frequency of the transmitter clock must be within 75mHz/s. The PCR packets must be transmitted at least every 100ms and the jitter of the PCR packets must be within 500ns.

If a digital video signal is transmitted over an asynchronous channel, such as an Asynchronous Transfer Mode (ATM) network, the PCR packets contained therein will be subject to a variable delay. This delay may result in the jitter exceeding the maximum allowable range (500ns). The transmitter and receiver clocks will therefore lose synchronisation. The received digital video signal may be incorrectly reconstructed unless the jitter is removed or at least brought back to within the allowable range.

The prior art suggests that jitter can be removed by passing the received data packets through a first-in-first-out (FIFO) buffer. The FIFO buffer is half filled with data packets. The data packets are then removed from the FIFO buffer in a continuous series. The data packets are removed in such a manner that the FIFO buffer stays about half full. The output rate of the FIFO buffer is controlled using complex control algorithms. This is known by those skilled in the art as an adaptive clock method.

There are a number of disadvantages associated with using complex control algorithms to remove jitter from a digital signal. Firstly, the method only works well when jitter is small. Secondly, jitter can only be removed from a plurality of received signals by replicating hardware. A separate implementation of the control algorithm is required for each of the received signals. Replication of the complex control algorithm is unattractive in terms of both hardware complexity and cost.

The transfer of multiple signals over an asynchronous channel therefore requires an alternative approach.

According to one aspect of the present invention, there is provided a method of receiving a digital signal made up of one or more packets which has been transmitted over a channel, the method comprising applying an indicator to the or each packets of the digital signal, which indicator is characteristic of the relative position of the or each packet with respect to time and releasing the or each packets when the indicator reaches a predetermined value, thereby outputting the digital signal.

An advantage of the present invention is that jitter can be removed from multiple signals that have been transmitted over an asynchronous channel. The method uses addition, subtraction and comparison operations that do not require complex processing.

According to a second aspect of the present invention, there is provided apparatus for receiving a digital signal made up of one or more packets which has been transmitted over a channel comprising an indicator generator for applying an indicator to the or each packets of the digital signal, which indicator is characteristic of the relative position of the or each packet with respect to time and release means for releasing each packet when the indicator reaches a predetermined value, thereby outputting the digital signal.

Reference will now be made, by way of example, to the accompanying drawings, in which:
Figure 1 is a simplified block diagram of a broadcast system according to the present invention;
Figure 2 shows a block diagram of a timing recovery unit as shown in Figure 1;
Figure 3 shows a block diagram of a queuing allocation unit as shown in Figure 2;
Figure 4 shows a flow chart for the operation of the queuing allocation unit of Figure 3;
Figure 5 illustrates the structure of the data packets produced by the queuing allocation unit of Figure 3;
Figure 6 shows a flow chart for checking the availability of data packets in the FIFO buffer of Figure 2;
Figure 7 shows a flow chart for passing data packets from the FIFO buffer to the multiplexer as shown in Figure 2;
Figure 8 illustrates the structures of the received signal and the re-timed signal of Figure 2;
Figure 9 shows a flow chart for tracking the output data rate of the timing recovery unit of Figure 2; and
Figure 10 shows a flow chart for updating the packet count required in the tracking process of Figure 9.

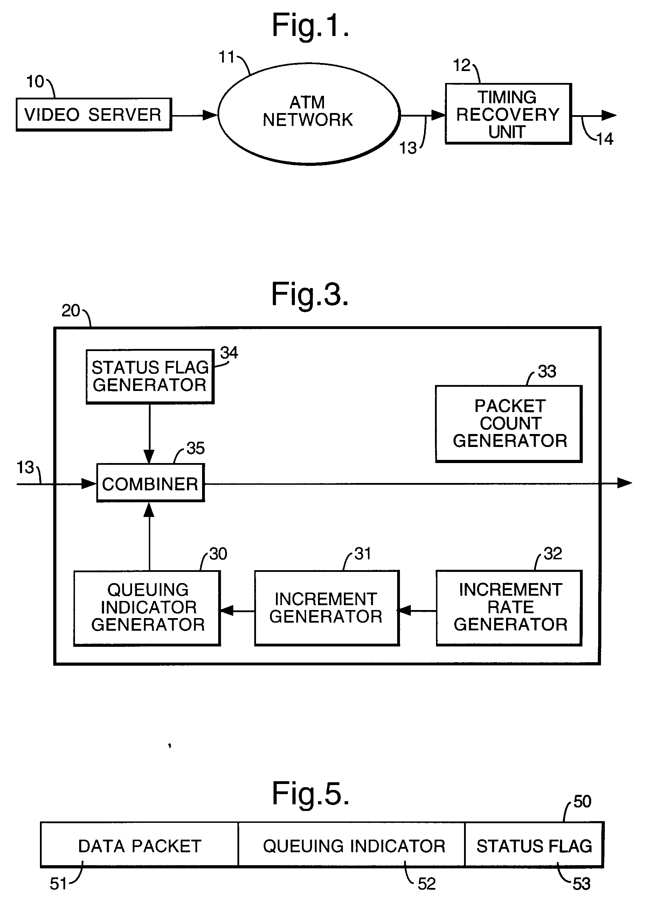

A digital video broadcast system shown in Figure 1 consists of a video server 10, an Asynchronous Transfer Mode (ATM) network 11 and a timing recovery unit 12. The video server 10 may contain a large number of compressed video signals that are to be transmitted over the ATM network 11. Before transmission, the plurality of compressed video signals are multiplexed into a single stream of data packets in the video server 10. Transmitting the stream of data packets over the ATM network 11 will produce jitter in the stream. The timing recovery unit 12 removes jitter from the received signal 13 to produce a re-timed signal 14. In one embodiment, the re-timed signal 14 may be passed to a receiver (not shown). In a second embodiment, the re-timed signal 14 may be re-transmitted over a further synchronous or asynchronous channel to further receivers (not shown).

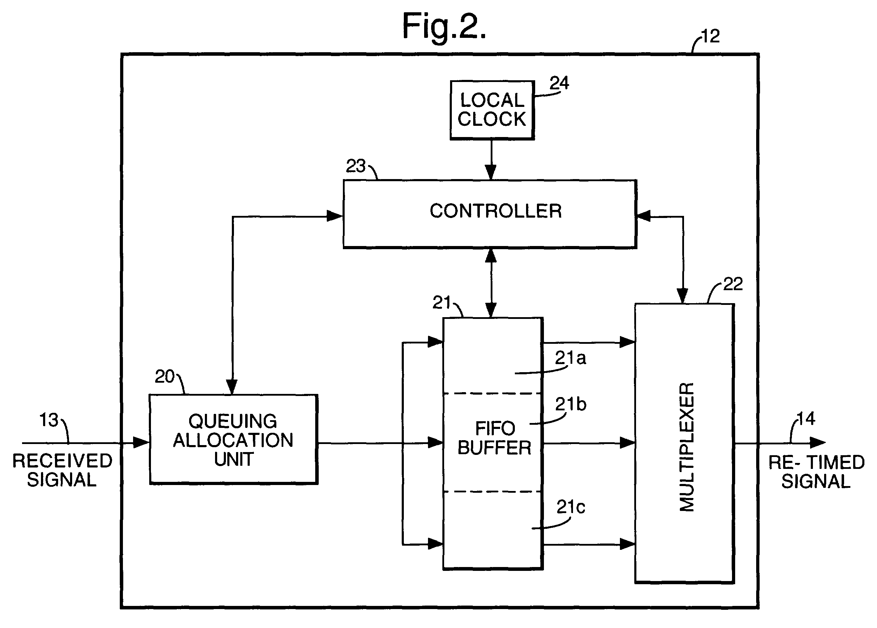

Figure 2 shows a block diagram of the timing recovery unit 12 illustrated in Figure 1. The timing recovery unit 12 includes a queuing allocation unit 20, a FIFO buffer 21, a multiplexer 22, a controller 23 and a local clock 24. Jitter is removed from the received signal 13 by passing the data packets through the queuing allocation unit 20, FIFO buffer 21 and multiplexer 22 under the control of the controller 23. This will be described in greater detail below. The data packets are output from the timing recovery unit 12 in there-timed signal 14.

The basic operation of the timing recovery unit 12 is described below. The data packets in the received signal 13 are passed to the queuing allocation unit 20. On entering the queuing allocation unit 20, each data packet is assigned a queuing indicator (not shown). The data packets and associated queuing indicators are then passed to the FIFO buffer 21 for storage. The FIFO buffer 21 is partitioned into a series of parallel sections, one section for each of the video signals in the received signal 13. Figure 2 shows three such parallel sections 21a, 21b and 21c. The data packets and associated queuing indicators from each video signal are stored in the relevant section of the FIFO buffer 21. The data packets are then output to the multiplexer 22. The data packets are output in such a way that the occupancy of each section of the FIFO buffer 21 stays about half full. The controller 23 controls the output of the data packets by comparing the associated queuing indicators with the local clock 24. The multiplexer 22 then combines the data packets from the plurality of video signals into one re-timed signal 14, based on the output data packets.

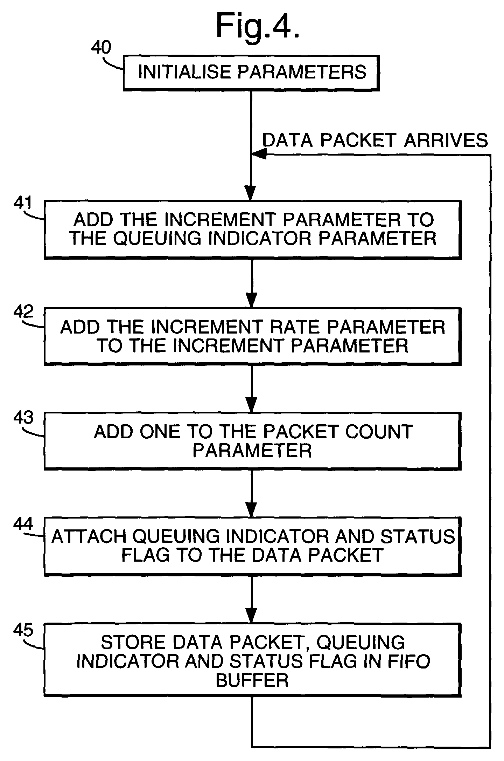

The operation of the timing recovery unit 12 can be divided into a number of processes. The first process (packet arrival) takes place in the queuing allocation unit 20. A block diagram of the queuing allocation unit 20 is shown in Figure 3. The queuing allocation unit 20 includes a queuing indicator generator 30, an increment generator 31, an increment rate generator 32, a packet count generator 33, a status flag generator 34 and a combiner 35.

The queuing indicator generator 30, increment generator 31, increment rate generator 32 and packet count generator 33 each produce a parameter which is used to re-time the respective video signals. For example, if the received signal 13 contains three video signals then three queuing indicator parameters are stored in the queuing indicator generator 30. Additionally, three increment parameters are stored in the increment generator 31, three increment rate parameters are stored in the increment rate generator 32 and three packet count parameters are stored in the packet count generator 33. These parameters are used to remove jitter from the received signal 13. Specifically, these parameters adjust the output data rate of the timing recovery unit 12. The status flag generator 34 produces a status flag. The purpose of the status flag will be explained in detail below.

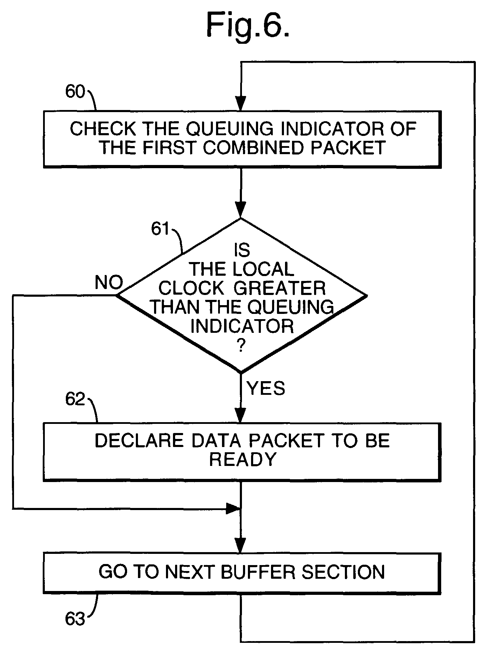

The packet arrival process takes place each time a data packet enters the queuing allocation unit 20. This process is described in the flow chart shown in Figure 4. The parameters stored in blocks 30-33 are initialised at step 40. The parameters for each video signal in blocks 30, 31 and 33 are updated in steps 41-43. In step 41 the increment parameter is added to the queuing indicator parameter. The increment rate parameter is added to the increment parameter in step 42. In step 43 the packet count parameter is incremented by one. The value of the queuing indicator produced by step 41 and the status flag are attached to the data packet in the combiner 35 of Figure 3 (step 44 of Figure 4). The data packet with attached queuing indicator and status flag will be referred to as a combined packet. The basic structure of the combined packet 50 is shown in Figure 5. The combined packet 50 includes a data packet 51, a queuing indicator 52 and a status flag 53. Finally in step 45 the combined packet 50 is passed to the appropriate section of the FIFO buffer 21. The first phase of the re-timing process is repeated each time a data packet arrives in the timing recovery unit 12.

It should be noted that the initialisation step occurs only once for each of the video signals. The parameters in blocks 30-34 are initialised as shown in Table 1.

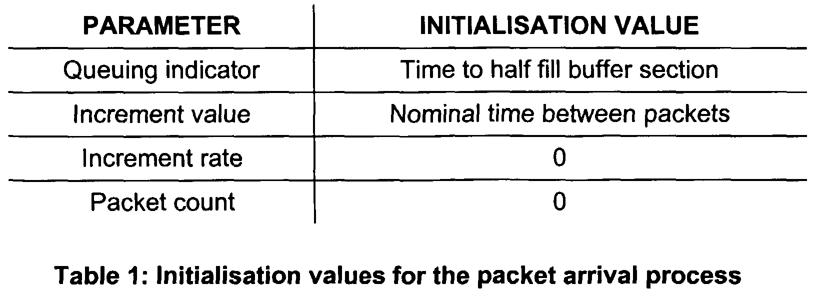

Initialising the queuing indicator as shown causes each section 21a-21c of the FIFO buffer to half fill before any data packets are removed. The increment value is initialised to represent a nominal time between data packets. This combination of parameters causes data packets to leave the FIFO buffer 21 in a regular manner. In an MPEG-2 system the local clock 24 (Figure 2) runs at 27MHz and as such the queuing indicator and increment value are expressed in units of 27MHz. The increment rate adjusts the nominal time between packets and is initially set to zero. This will be described in more detail below. The packet count keeps track of the number of combined packets in each section of the FIFO buffer 21 and is initialised to zero.

The packet arrival process stores the combined packets 50 in the relevant sections of the FIFO buffer 21. The second phase of the re-timing process (packet availability) indicates when the combined packets 50 are ready to leave the FIFO buffer 21. This second process is described in the flow chart shown in Figure 6. In step 60 the controller 23 (Figure 2) checks the queuing indicator 52 (Figure 5) of the first combined packet 50 in the FIFO buffer 21. The controller 23 compares the value of the local clock 24 with the queuing indicator 52 (step 61). In step 62 the controller 23 indicates that the combined packet 50 is ready to leave the FIFO buffer 21 when the value of the local clock 24 is greater than or equal to the value of the queuing indicator 52. The packet availability process is repeated for each section in the FIFO buffer 21 (step 63). In this way the controller 23 monitors which sections of the FIFO buffer 21 have data packets 51 that are ready to be passed to the multiplexer 22.

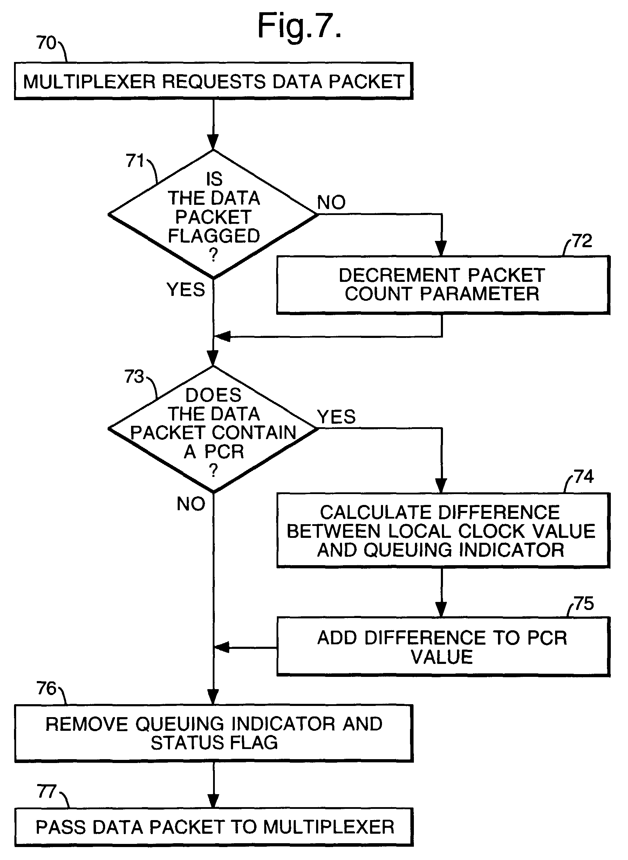

The third phase of the re-timing process (packet request) causes the data packets 51 to be output from the FIFO buffer 21 to the multiplexer 22 (Figure 2). This third process is shown in the flow chart of Figure 7. In step 70 the multiplexer 22 requests a combined packet 50 that has been declared ready by the second stage of the re-timing process. The controller 23 checks the status flag 53 of the combined packet 50 and determines if it has been counted (step 71). In step 72 the packet count parameter is decremented by one if the combined packet 50 has not been counted. The controller 23 then checks if the data packet 51 contains a PCR (step 73). If the data packet 51 includes a PCR, the PCR value is adjusted in steps 74 and 75. These steps compensate for any time delay introduced by not outputting the data packet 51 at the instant it becomes ready. In step 74 the difference between the value of the local clock 24 and the queuing indicator 52 is calculated. In step 75 this difference is added to the PCR value. The queuing indicator 52 and status flag 53 are removed from the data packet 51 in step 76. The data packet 51 is then passed to the multiplexer 22 in step 77. The multiplexer 22 combines the data packets into one continuous bitstream. The continuous bitstream is output from the timing recovery unit as the re-timed signal 14.

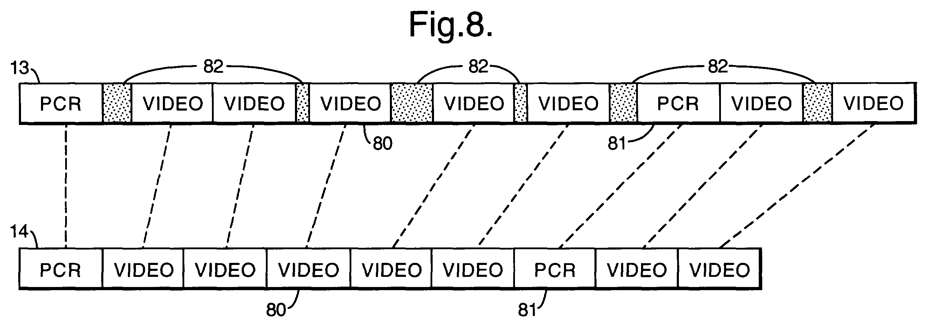

Figure 8 illustrates an example of the received signal 13 and corresponding re-timed signal 14. Both signals consist of video packets 80 and PCR packets 81, collectively known as data packets. The timing recovery unit 12 generates the re-timed signal 14 by removing the variable delay (jitter) 82 from the received signal 13. Over time the flow of data packets into the timing recovery unit 12 should be equal to the flow of data packets out of the timing recovery unit 12.

The method of removing jitter as described above relies on accurately estimating the required data rate of the re-timed signal 14. The data rate determines how fast the data packets 51 should leave the FIFO buffer 21. The higher the data rate, the smaller the increment value in the queuing allocation unit 20. The lower the data rate, the larger the increment value. The data rate can be estimated using a number of techniques as will be described in more detail below.

It is reasonable to assume that the video server 10 of Figure 1 can determine the correct data rate and transmit this value to the timing recovery unit 12. The data rate value can then be received and interpreted by the controller 23 (Figure 2). The data rate may also be estimated by counting the number of packets between adjacent PCR packets. In addition, the data rate may be obtained from reading standard information tables that are periodically transmitted with the video signals.

Obtaining an accurate estimate of the data rate is not a complete solution to the re-timing problem. There may be a small discrepancy between the actual data rate used by the video server 10 and the data rate that will be produced by the timing recovery unit 12. This would cause the occupancy of the FIFO buffer 21 to either increase or decrease and could eventually lead to buffer overflow or underflow.

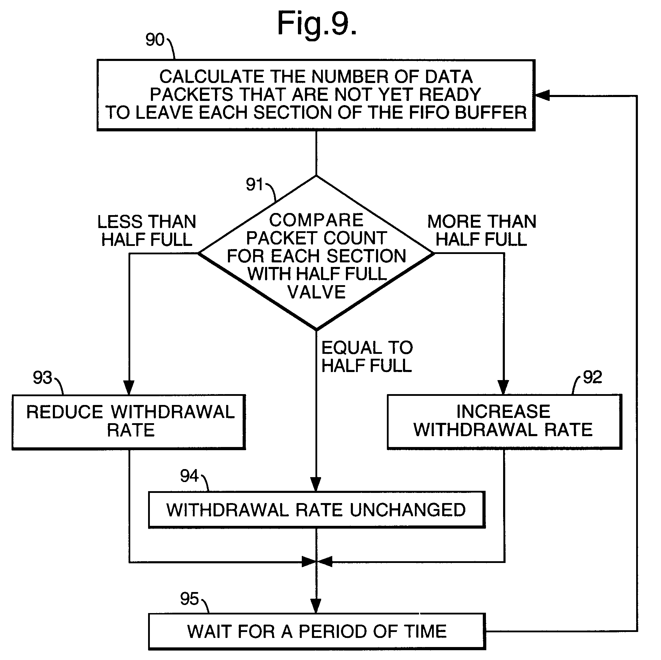

In the present invention this can be avoided using a tracking process. The tracking process ensures that each section of the FIFO buffer 21 remains about half full throughout the operation of the timing recovery unit 12. The tracking process runs in parallel with the other stages of the process described above and is shown in Figure 9.

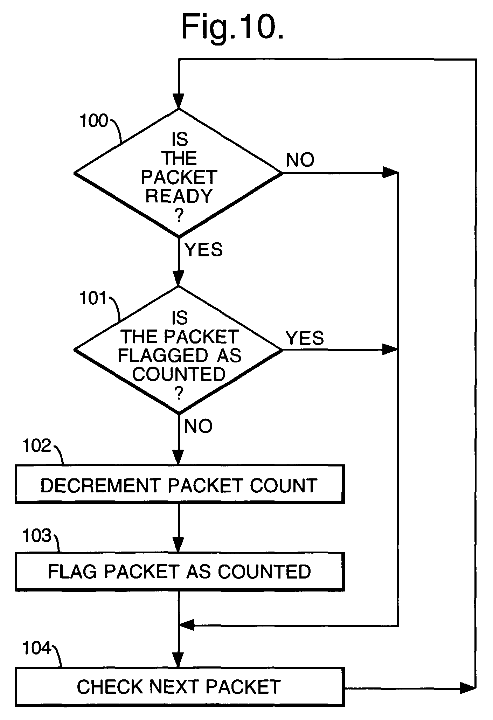

The first step 90 of the tracking process is to update the packet count parameter in block 33 of the queuing allocation unit 20 (Figure 3). This gives the number of combined packets 50 that are not yet ready to leave each section of the FIFO buffer 21. This step is explained below in more detail by reference to Figure 10. The updated packet count is compared to a half full value in step 91. If it is more than half full, the withdrawal rate is increased (step 93). If the packet count is less than half full, the withdrawal rate is decreased (step 94). If the packet count is approximately equal to half full then the withdrawal rate remains substantially unchanged. The withdrawal rate can be adjusted by varying the increment rate in the queuing allocation unit 20. Typically, the increment rate parameter is constrained to be within an allowable range. The withdrawal rate adjustment takes place during the packet arrival phase of the re-timing process. The tracking stage of the re-timing process is executed periodically to keep each section of the FIFO buffer 21 around half full (step 95).

Figure 10 shows a flow chart for updating the packet count (step 90 of Figure 9). In step 100 the controller 23 (Figure 2) determines if the first combined packet 50 (Figure 5) is ready to leave the FIFO buffer 21. If it is ready, the controller 23 checks if the combined packet has been counted (step 101). The status flag 53 indicates whether the combined packet 50 has been counted or not. The packet count is decremented for any combined packets 50 that are ready but not yet counted (step 102). In step 103 the combined packets 50 that have been decremented are then flagged as having been counted. This process is repeated for every packet in the FIFO buffer 21 (step 104).

In a further embodiment of the present invention, the increment value may be constrained to be within an allowed range. The tracking stage of the re-timing process may cause the increment value to extend beyond the allowed range. If this occurs, the controller 23 raises an alarm, resets the increment rate to zero and returns the increment value to within the allowed range. In a further embodiment the allowed range of the increment value and the value of the increment rate may be tuned to match the characteristics of the original video signals. This ensures that the timing recovery unit 12 does not degrade the timing of the original video signals.

The individual elements of the present invention are not unduly complex. However, the challenge of successfully implementing the present invention lies in performing the required number of operations in the time available. The number of operations required per second can be calculated by determining the frequency of the each of the processes in the present invention and the size of each of the data types.

Table 2 shows typical data sizes for one embodiment of the present invention.

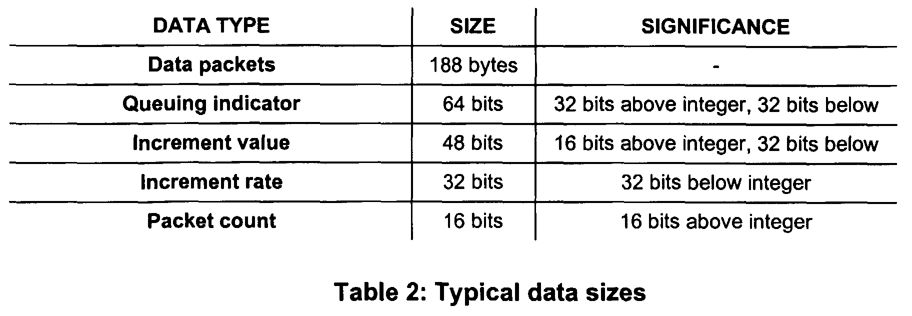

The data types include data packets, queuing indicators, increment values, increment rates and packet counts. The size of the data types is expressed in bits and is an indication of the maximum value that each data type can take. The "significance" column is an indication of how many bits make up the integer part (above integer) and how many bits make up the fractional part (below integer). This shows the precision of the data types. It should be noted that the integer value of the queuing indicator variable is attached to each data packet in the "packet arrival" process, i.e. 32 bits.

Table 3 summarises the number of operations per second that are required for each process in the present invention.

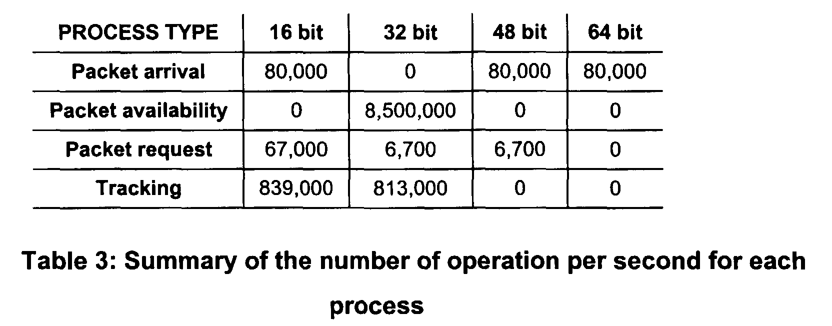

The processes are categorised as packet arrival, packet availability, packet request and tracking. The table is divided into the number of operations per second for each process according to the data type size (16, 32, 48 or 64 bits). For example, the packet arrival stage of the re-timing process requires 80,000 16-bit operations/sec, 80,000 48-bit operations/sec and 80,000 64-bit operations/sec.

Table 4 summarises the number of operations/sec if the present invention is implemented using 32 bit arithmetic. The number of operations/sec is calculated from Table 3. Each 48 and 64-bit operation in Table 3 requires two operations on a 32-bit machine.

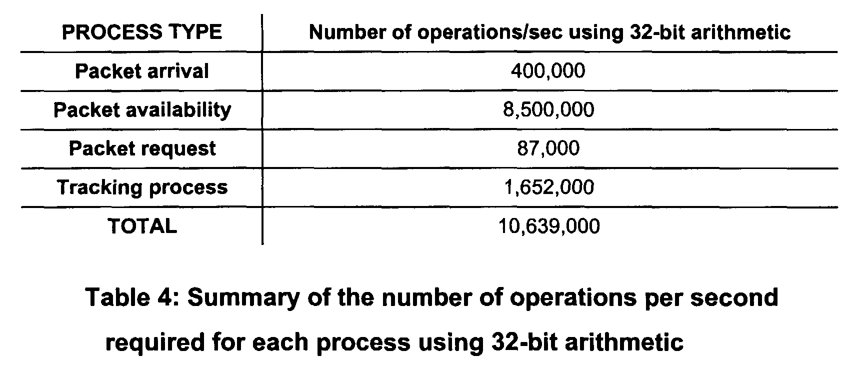

The present invention has been described in relation to digital video signals. However the present invention could be used to remove jitter from any packet based digital signal, e.g. digital audio or digital data transmission. In Figure 1, the video server 10 could be replaced by a plurality of video servers or by a plurality of encoders and a multiplexer. In Figure 1 jitter could also be caused by transmitting the digital signal over any type of asynchronous network or may even be introduced by using a recording device. It should be further appreciated that the present invention could be adapted to remove jitter according to any transmission standard and is not confined to MPEG-2 applications.

It should also be appreciated that the embodiments of the present invention shown in Figures 1-3 are representative of the inventive concept. Alternative embodiments may include replacing the FIFO buffer 21 with a series of parallel buffers or memories. The controller 23 may also be replaced with multiple controllers, e.g. one controller for each stage of the re-timing process.

## Claims

1. A method of receiving a digital signal made up of one or more packets which has been transmitted over a channel, the method comprising:
applying an indicator to the or each packets of the digital signal, which indicator is characteristic of the relative position of the or each packet with respect to time; and
releasing the or each packets when the indicator reaches a predetermined value, thereby outputting the digital signal.

2. The method of claim 1, further comprising providing the digital signal with a plurality of packets and applying a different indicator to each of the packets.

3. The method of claim 1 or claim 2, further comprising releasing the or each packets in an order which is dictated by the indicator.

4. The method of any of claims 1 to 3, further comprising releasing the or each packets such that any timing errors in the received signal relative to an original transmitted signal are removed.

5. The method of any preceding claim, further comprising receiving the digital signal after it has been transmitted over an asynchronous channel.

6. The method according to any preceding claim, further comprising generating the indicator by determining one or more parameters of the digital signal and using the or each parameter to produce the indicator.

7. The method of claim 6, further comprising generating a queuing indicator, an increment value and an increment rate.

8. Apparatus for receiving a digital signal made up of one or more packets which has been transmitted over a channel comprising:
an indicator generator of applying an indicator to the or each packets of the digital signal, which indicator is characteristic of the relative position of the or each packet with respect to time; and
release means for releasing each packet when the indicator reaches a predetermined value, thereby outputting the digital signal.

9. The apparatus of claim 8, wherein the digital signal comprises a plurality of packets and a different indicator is applied to each of the packets.

10. The apparatus of claim 8 or claim 9, wherein the or each packets are released in an order which is dictated by the indicator.

11. The apparatus of any of claims 8 to 10, wherein the or each packets are released such that any timing errors in the received signal relative to an original transmitted signal are removed.

12. The apparatus of any of claims 8 to 11, wherein the digital signal has been transmitted over an asynchronous channel.

13. The apparatus according to any of claims 8 to 12, wherein the indicator is generated by determining one or more parameters of the digital signal and using the or each parameter to produce the indicator.

14. The apparatus of claim 13, wherein the parameters comprise a queuing indicator, an increment value and an increment rate.
